(19)

Europäisches
Patentamt

European
Patent Office

Office européen
des brevets

(11)     **EP 3 104 517 A2**

(12)                    **EUROPEAN PATENT APPLICATION**

(43) Date of publication:
    **14.12.2016  Bulletin 2016/50**

(51) Int Cl.:
    **H02M 7/5387** *(2007.01)*     **H02M 7/493** *(2007.01)*

(21) Application number: **16172458.8**

(22) Date of filing: **01.06.2016**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **MA MD**

(30) Priority:  **01.06.2015   US 201562169131 P
            25.04.2016   US 201615137641**

(71) Applicant: **Otis Elevator Company
    Farmington, Connecticut 06032 (US)**

(72) Inventors:
    • **AGIRMAN, Ismail
       Farmington, Connecticut 06032 (US)**
    • **JIANG, Dong
       Wuhan
       Hubei Province
       430074 (CN)**
    • **KIM, HanJong
       Farmington, Connecticut 06032 (US)**

(74) Representative: **Gardiner, Stephen Robin et al
    Dehns
    St Bride's House
    10 Salisbury Square
    London EC4Y 8JD (GB)**

(54)     **PARALLELED ACTIVE FRONT-END RECTIFIERS WITH NEGLIGIBLE COMMON-MODE**

(57)     Embodiments herein relate to a rectifier to supply a DC bus that in turn supplies voltage to a converter that drives a motor and configuring the rectifier to minimize or eliminate common mode voltage between the DC bus and the AC source. In this way, the embodiments herein relate to timing and switching a power from the rectifier to the DC bus.

FIG. 2

**Description**

FIELD OF THE DISCLOSURE

The subject matter disclosed herein relates generally to the field of elevators, and more particularly to a multicar, ropeless elevator system.

BACKGROUND

An elevator system, such as traction, hydraulic, and self-propelled elevator systems, based on the application (e.g., high rise buildings) can utilize a power system to propel a car within an elevator shaft. At present, the power system can employ boost rectifiers to improve performance of the power system. However, timing and switching a power from the boost rectifiers to a direct current (DC) bus includes inherent electromagnetic interference (EMI) problems.

In general, EMI noise can be divided into two major groups: differential mode (DM) noise and common-mode (CM) noise. DM noises are conducted between phases. CM noises are conducted together with all phases through the parasitic capacitors to the ground. CM noises are with serious concern for motor drives because CM noises increase the EMI in the motor drive and damage the motor bearing and winding insulation. Unfortunately, in certain applications, solutions such as adding CM filters to attenuate CM noises are not viable due to the significant weight penalty of each CM filter.

BRIEF DESCRIPTION

According to one embodiment of the invention, a three-phase paralleled active front-end rectifier is provided. The three-phase paralleled active front-end rectifier comprises two voltage-source-rectifiers connected in parallel to an alternating current power side through a coupling inductor and connected directly to a direct current power side, wherein the three-phase paralleled active front-end rectifier is configured to transfer alternating current power with a zero common-mode from the alternating current power side to the direct current power side by regulating a direct current voltage of the three-phase paralleled active front-end rectifier and controlling the alternating current power.

In any of the above method embodiments, or in the alternative, the each of the two voltage-source-rectifiers may include three pairs of switches connected directly to the direct current power side and through coupling inductor in the alternating current side.

In any of the above method embodiments, or in the alternative, the coupling inductor may include three pairs of windings and is configured to control a circulation current of the three-phase paralleled active front-end rectifier.

In any of the above method embodiments, or in the alternative, the coupling inductor may include three inductors, each of which includes one pair of windings.

In any of the above method embodiments, or in the alternative, the alternating current power side may include three alternating current power sources.

In any of the above method embodiments, or in the alternative, the three-phase paralleled active front-end rectifier may be included in a ropeless elevator system.

According to one embodiment of the invention, a method for controlling a three-phase paralleled active front-end rectifier is provided. The method comprising transferring, by the three-phase paralleled active front-end rectifier, alternating current power with a zero common-mode from an alternating current power side through two voltage-source-rectifiers of the three-phase paralleled active front-end rectifier to an alternating current power side, wherein the two voltage-source-rectifiers are connected through a coupling inductor to the alternating current power side and connected directly to the direct current power side; regulating, by the three-phase paralleled active front-end rectifier, a direct current voltage of the three-phase paralleled active front-end rectifier; and controlling, by the three-phase paralleled active front-end rectifier, the alternating current power via alternating current waveforms.

In any of the above method embodiments, or in the alternative, the each of the two voltage-source-rectifiers may include three pairs of switches connected directly to the direct current power side and through coupling inductor in the alternating current side.

In any of the above method embodiments, or in the alternative, the method may further comprise controlling a circulation current of the three-phase paralleled active front-end rectifier by three pairs of windings of the coupling inductor.

In any of the above method embodiments, or in the alternative, the coupling inductor may include three inductors, each of which includes one pair of windings.

In any of the above method embodiments, or in the alternative, the alternating current power side may include three alternating current power sources.

In any of the above method embodiments, or in the alternative, the three-phase paralleled active front-end rectifier may be included in a ropeless elevator system.

Additional features and advantages are realized through the techniques of the present disclosure. Other embodiments and aspects of the disclosure are described in detail herein. For a better understanding of the disclosure with the advantages and the features, refer to the description and to the drawings.

BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 depicts a multicar elevator system in accordance with an embodiment of the present invention;
FIG. 2 shows of three-phase paralleled rectifier in accordance with an embodiment of the present invention;
FIG. 3 illustrates an active front-end rectifier control block diagram in accordance with an embodiment of the present invention;
FIG. 4 illustrates voltage vectors for paralleled rectifiers in accordance with an embodiment of the present invention;
FIG. 5 illustrates a reference voltage combined by paralleled voltage vectors with sector 1 as example in accordance with an embodiment of the present invention;
FIG. 6 illustrates comparators and pulse generation in each switching cycle with sector 1 as example in accordance with an embodiment of the present invention; and
FIG. 7 depicts coupling inductor structure for circulating current control and boost inductor in accordance with an embodiment of the present invention.

DETAILED DESCRIPTION

In general, embodiments herein relate to a rectifier to supply a DC bus that in turn supplies voltage to a converter that drives a motor and configuring the rectifier to minimize or eliminate common mode noise between a direct current (DC) bus and an alternating current (DC) source. In this way, the embodiments herein relate to timing and switching a power from the rectifier to the DC bus.

Embodiments herein set forth a drive and motor system and/or method for a rectifier system (e.g., a three-phase active front-end rectifier) to actively control a DC voltage, a AC side sinusoidal current, and a power factor by fast switching of power electronics devices.

Generally, the switching of power electronics devices in active front-end rectifier also brings electromagnetic interference (EMI) problems. EMI filters are designed to attenuate EMI noise to satisfy the EMI standards, which are defined for particular applications, but EMI filters add weight and complexity for the rectifier system. Further, a more complex topology for an active front-end rectifier can be applied to further reduce the CM voltage. For example, paralleled rectifiers have more control freedoms than the standard two-level rectifier. Yet, while paralleled rectifiers with interleaved PWM can reduce both DM and CM voltage, but paralleled rectifiers cannot eliminate CM voltage. In turn, the rectifier system still requires a CM filter.

Thus, the three-phase active front-end rectifier provides a PWM method to achieve zero-CM-voltage for paralleled rectifiers. With the three-phase active front-end rectifier, an output CM voltage for paralleled rectifiers can be eliminated and no CM filter is needed. Also, the three-phase active front-end rectifier can reduce DM noise, current ripple, and DC side EMI noise. Additionally, the rectifier boost inductor is embedded in the coupling inductors for paralleled rectifier.

In one embodiment, the three-phase active front-end rectifier is utilized in a power system of a ropeless elevator system, also referred to as self-propelled elevator system. For example, a linear motor system of the ropeless elevator system can employ a three-phase active front-end rectifier to improve the performance of the linear motor system.

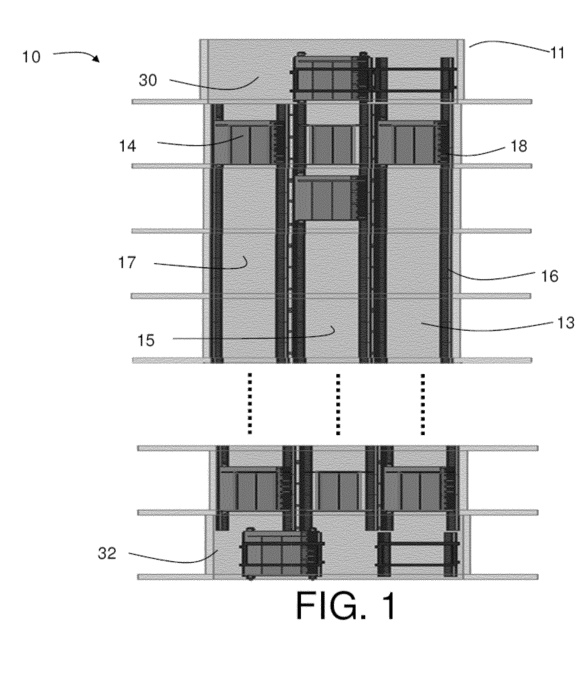

FIG. 1 depicts a multicar, ropeless elevator system 10 in an exemplary embodiment. Elevator system 10 includes a hoistway 11 having a plurality of lanes 13, 15 and 17. While three lanes are shown in FIG. 1, it is understood that embodiments may be used with multicar ropeless elevator systems that have any number of lanes. In each lane 13, 15, 17, cars 14 travel in one direction, i.e., up or down or both directions. For example, in FIG. 1 cars 14 in lanes 13 and 15 travel up and cars 14 in lane 17 travel down. One or more cars 14 may travel in a single lane 13, 15, and 17.

Above the top floor is an upper transfer station 30 to impart horizontal motion to elevator cars 14 to move elevator cars 14 between lanes 13, 15 and 17. It is understood that upper transfer station 30 may be located at the top floor, rather than above the top floor. Below the first floor is a lower transfer station 32 to impart horizontal motion to elevator cars 14 to move elevator cars 14 between lanes 13, 15 and 17. It is understood that lower transfer station 32 may be located at the first floor, rather than below the first floor. Although not shown in FIG. 1, one or more intermediate transfer stations may be used between the first floor and the top floor. Intermediate transfer stations are similar to the upper transfer station 30 and lower transfer station 32. Cars 14 are propelled using a motor and drive system (e.g., a linear motor system) having a primary, fixed portion 16 and a secondary, moving portion 18. The primary portion 16 includes windings or coils mounted at one or both sides of the lanes 13, 15 and 17. Secondary portion 18 includes permanent magnets mounted to one or both sides of cars 14. Primary portion 16 is supplied with drive signals to control movement of cars 14 in their respective lanes.

In another embodiment, the three-phase active front-end rectifier is utilized in an electric motor system of a traction elevator system. The traction elevator system also includes a hoistway having a plurality of lanes or shafts. In each shaft, an elevator car travels in one direction, i.e., up or down. The electric motor system utilizes the power electronics inverter (e.g., as variable speed alternating drive (AC) motor drive) to improve the performance of maneuvering the elevator cars via cables. Other applications and embodiment of the three-phase active front-end rectifier include compressors and/or powers systems for trains, boats, planes, etc.

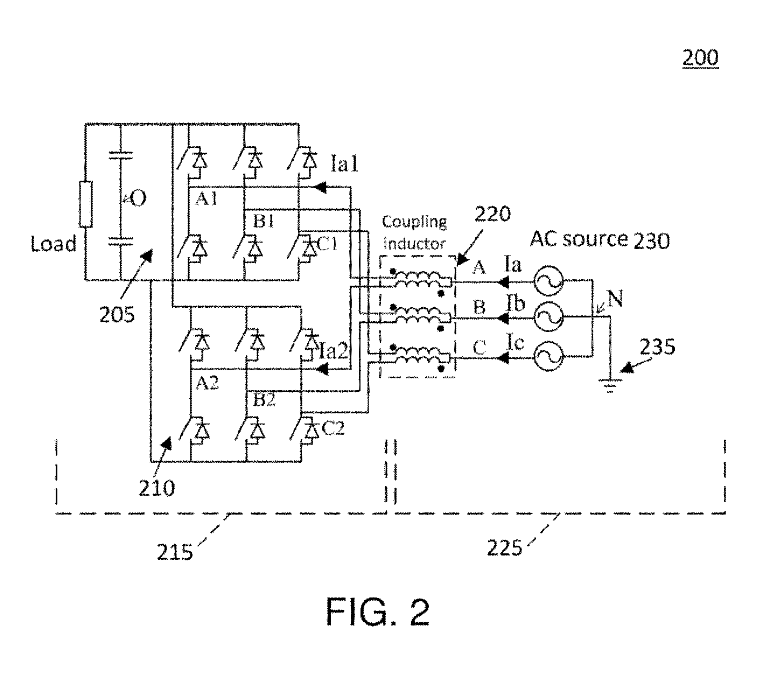

Turning to FIG. 2, a three-phase paralleled active front-end rectifier 200 is shown in accordance with an illustrative embodiment. Two voltage-source-rectifiers 205, 210, each of which includes three pairs of switches, are connected directly in a DC side 215 and through coupling inductor 220 in a AC side 225. The Two voltage-source-rectifiers 205, 210 (e.g., two three-phase converters) are parallel by being directly connected to a same side of the DC side 215 and by terminals A1, B1, C1 and A2, B2, C2 being connected to the coupling inductor 220.The coupling inductor 220 control or limit a circulation current. AC sources 230 are directly connected to the coupling inductors 220. Not that a DC side capacitor mid-point is identified by the demarcation O and that an AC side neutral point is identified by the demarcation N. In operation, three-phase paralleled active front-end rectifier 200 transfers AC power to a DC bus, while regulating a DC voltage and controlling an AC current with waveforms.

In addition, as seen in FIG. 2, the AC side neutral point N can be directly connected to a ground 235, while a DC side 215 grounding can be through parasitic capacitance or impedance. A common-mode voltage will drop between the AC side neutral point N and DC side capacitor mid-point O and generate CM current through the ground path. The CM output voltage for the rectifier is defined by equation (1).

$$V_{cm} = \frac{1}{3}(V_{AO} + V_{BO} + V_{CO}) = \frac{1}{6}(V_{A1O} + V_{A2O} + V_{B1O} + V_{B2O} + V_{C1O} + V_{C2O}) \qquad (1)$$

$V_{A1O}$, $V_{B1O}$, and $V_{C1O}$ are outputted with respect to terminals A1, B1, and C1. $V_{A2O}$, $V_{B2O}$, and $V_{C2O}$ are outputted with respect to terminals A2, B2, and C2.In this way, an output voltage in each phase-leg is the product of a DC-link voltage and a switching function. The switching function combination is used to achieve a zero-CM-voltage.

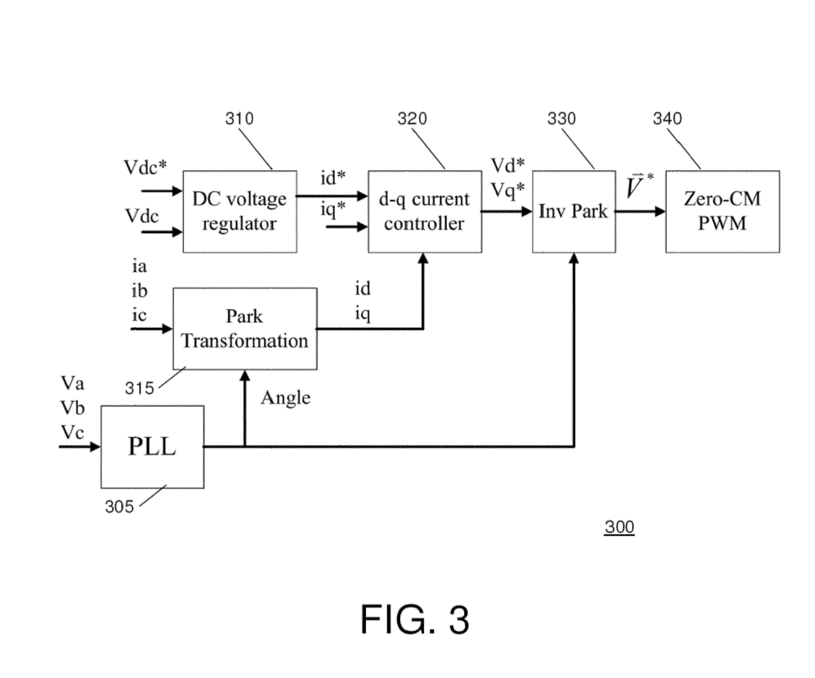

Turning to FIG. 3, a paralleled active front-end rectifiers control block diagram 300 is shown in accordance with an illustrative embodiment. A phase-lock-loop (PLL) 305 is used to track the voltage phase angle based on the input of $V_a$, $V_b$, $V_c$. Further, an outer loop of the diagram 300 is DC-link voltage loop, which includes generating a d-axis reference current id* by the DC voltage regulator 310. Utilizing a park transformation 315, AC source side currents ia, ib and ic are sampled and transferred to d-q current controller 320. Note that that ia & ib & Ic are the sum of Ia1 (from converter 1) and Ia2 (from converter 2) of FIG. 2. In this way, an inner loop of the diagram 300 is the d-q current loop, which includes the reference d-q voltage Vd* and Vq* being generated by the d-q current controller 320 from the d-axis reference current id*, the current iq*, and sampled currents id, iq. Transferring d-q reference voltage back to a stationary coordinate, the reference voltage vector $\vec{V}^*$ is combined and sent to a zero-CM PWM module 340. The zero-CM PWM 340 is used to combine the reference voltage without generating CM voltage. The PWM can be synchronous and/or identical.

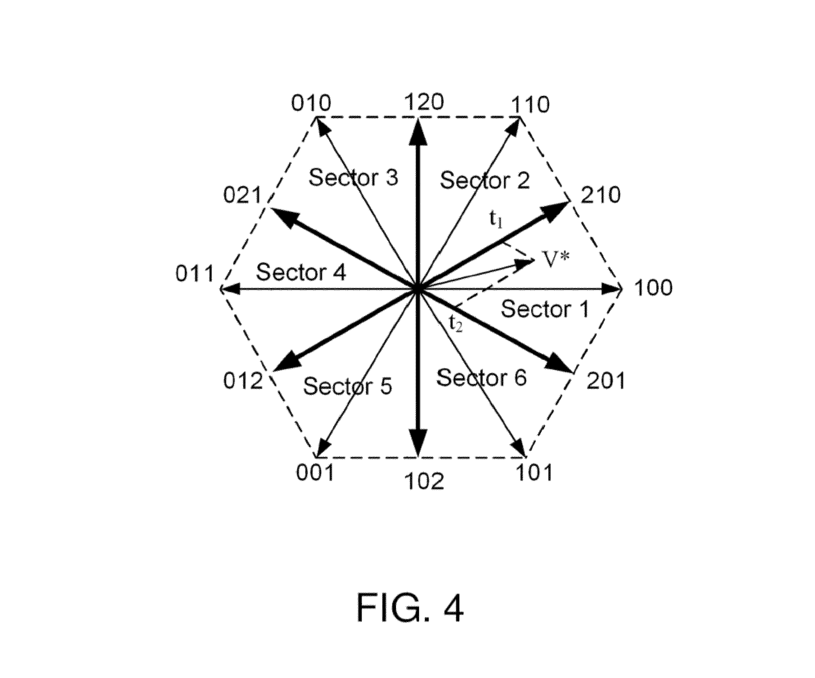

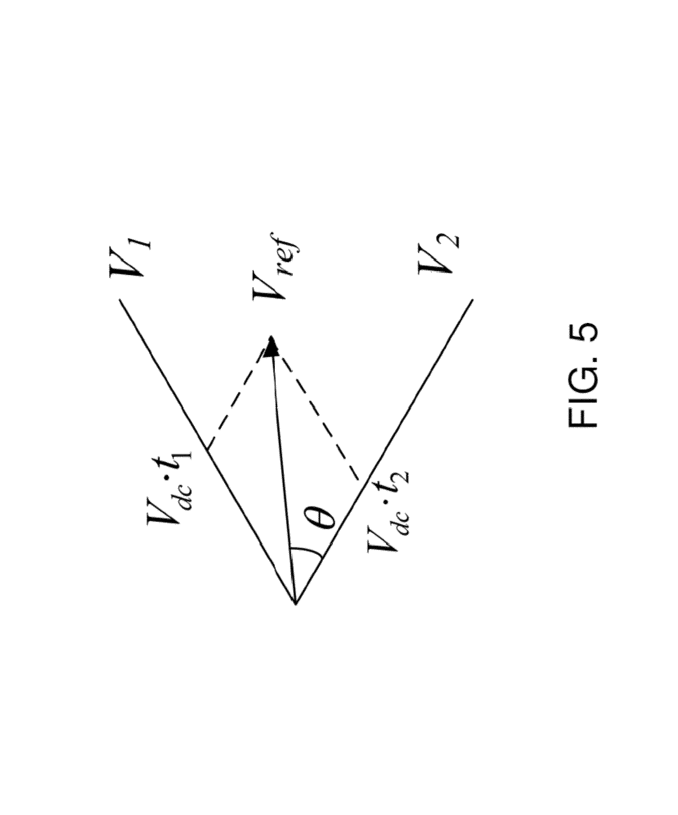

FIG. 4 illustrates combined voltage vectors for paralleled two-level rectifiers (e.g., two voltage-source-rectifiers 205, 210). The combined voltage vectors are based on six non-zero vectors (e.g., 100, 110, 010, 011, 001, 101) for a standard two-level rectifier. The two paralleled two-level rectifiers are not using these voltage vectors, rather the paralleled two-level rectifiers are utilizing the two adjacent voltage vectors. The combined voltage vectors are shown with thick arrows (e.g., 210, 120, 021, 012, 102, 201). With each of these combine voltage vectors, the output CM voltage will be zero. Then the reference voltage vector $\vec{V}^*$ will be generated by these six combine voltage vectors. The voltage vector plane can be divided into 6 sectors (e.g., Sector 1, Sector 2, Sector 3, Sector 4, Sector 5, and Sector 6). A reference voltage can be generated by two adjacent combined voltage vectors in each sector. The reference voltage calculation is shown in FIG.5 and equation (2).

$$\begin{cases} \dfrac{V_{dc} \cdot t_1}{\sin \theta} = \dfrac{V_{dc} \cdot t_2}{\sin(\dfrac{\pi}{3} - \theta)} = \dfrac{V_{ref} \cdot T_s}{\sin(\dfrac{2\pi}{3})} \\ t_0 = T_s - t_1 - t_2 \end{cases} \qquad (2)$$

The active time for two combined voltage vectors $V_1$ and $V_2$ are $t_1$ and $t_2$ in each switching cycle, with the remaining zero voltage time of $t_0$.

For example, Sector 1 has two combined vectors 210 and 201 with active time of $t_1$ and $t_2$. A rectifier 1 and a rectifier 2 will respectively be with 110 and 100 in $t_1$ period and 100 and 101 in $t_2$ time. To achieve a voltage balance in the two rectifiers 1 and 2, in the first $t_1/2$ period rectifier 1 is with 110 and rectifier 2 is with 100; in the second $t_1/2$ period rectifier 1 is with 100 and rectifier 2 is with 110. Similarly, in first $t_2/2$ rectifier 1 is with 100 and rectifier 2 is with 101; in the second $t_2/2$ period rectifier 1 is with 101 and rectifier 2 is with 100. For the two zero vector periods in the beginning and end of the switching period ($t_0/4$), rectifier1 is with 111 and rectifier 2 is with 000; in the central zero vector period ($t_0/2$) rectifier 1 is with 000 and rectifier 2 is with 111. The voltage vector arrangement in each switching cycle in Sector 1 is shown in Table1.

Table 1. Voltage Vector Arrangement In Each Switching Cycle: Sector 1

|  | Rectifier 1 | Rectifier 2 |
|---|---|---|
| t0/4 | 1,1,1 | 0,0,0 |
| t1/2 | 1,1,0 | 1,0,0 |
| t2/2 | 1,0,0 | 1,0,1 |
| t0/2 | 0,0,0 | 1,1,1 |
| t1/2 | 1,0,0 | 1,1,0 |
| t2/2 | 1,0,1 | 1,0,0 |
| t0/4 | 1,1,1 | 0,0,0 |

After calculating of the active time for each vector, a duty cycle for different phases can be determined and comparators are generated and sent to compare with the triangle waveforms, as shown in FIG.5.

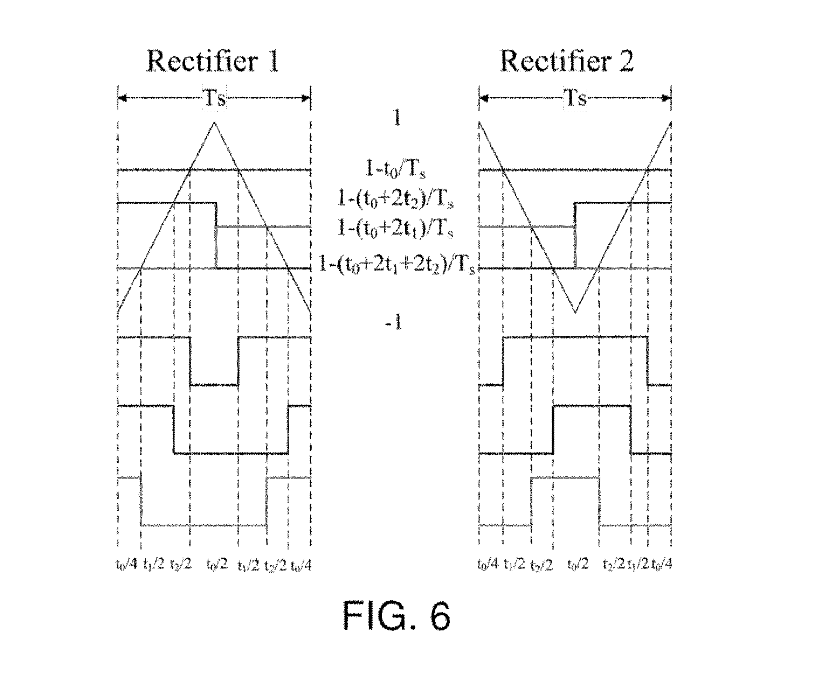

With respect to a sequence of active time with reference to Table 1, in both the first half and second half of the switching cycle, the $V_1$ vector active time $t_1/2$ is before the $V_2$ vector active time $t_2/2$. This is different from the sequence of standard PMW, which has $t_1/2$ in two sides of $t_2/2$. The change in the sequence of active time as seen in Table 1 minimizes switching actions, while each phase still switches twice in each switching cycle. Note that some pulses are not symmetrical in each switching cycle, so the comparator value in each switching cycle will not be constant value and have a step change, as shown in FIG.6.

For the voltage vector arrangement in each switching period and comparators and pulse generation in Sector 2~Sector 6, the principle is the same. Because of the voltage unbalance for the two rectifiers in each switching cycle, coupling inductors are needed for each phase to limit the circulating current. In this invention, the coupling inductors also combine the function of boost inductor for the active-front-end rectifiers.

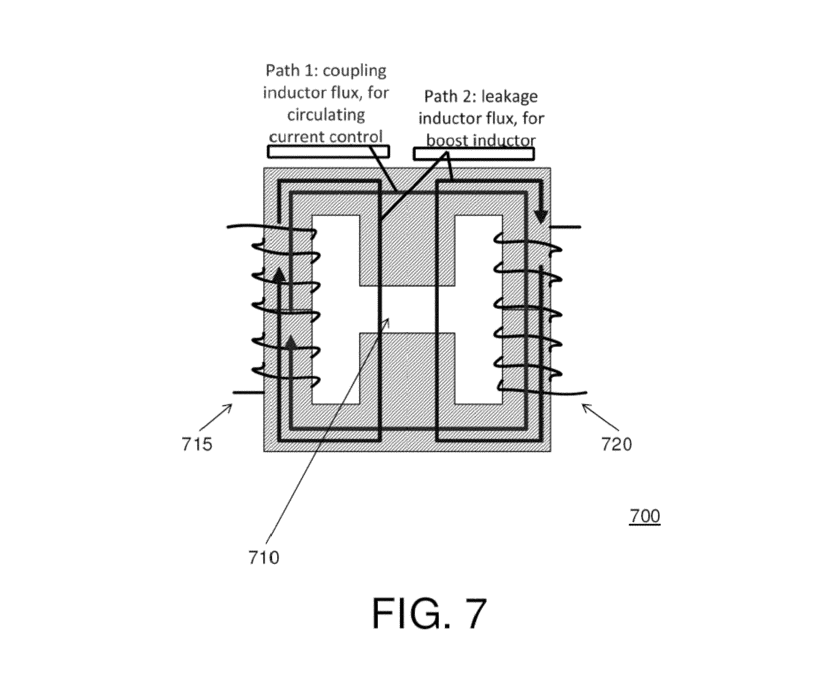

FIG. 7 shows the coupling inductor physical structure 700 that includes two E cores with an airgap 710 in the central leg. Two windings 715, 720 are in the legs in two sides, with inversed directions. A first arrow line (e.g., Path 1) shows the coupling inductor flux, which is in the path without airgap. Second and third arrow lines (e.g., Path 2) show the leakage inductor flux, which go through the central airgap. The coupling inductor flux is generated by the circulating current, and the inductance is used to limit the circulating current. The leaking inductor flux is generated by the output current and the inductance is used for boost inductor. Then, no extra boost inductor is needed for the active front-end rectifier. In a general boost rectifier, a boost inductor is needed. However, due to the above paralleled rectifiers, a combined the coupling inductor is combined with the active front-end rectifier thereby eliminating the need for the extra boost inductor.

In view of the above, the technical effects and benefits of embodiments of a rectifier system include achieving a zero-CM-voltage that enables control capability of the DC-link voltage and AC side sinusoidal current and unity power factor for active front-end rectifier system. Eliminating common-mode voltage for the inverter output, significant reductions of CM EMI noise, and eliminating a need for CM EMI filters, along with a reduction of an input current ripple, a DC side (e.g., DC capacitor) current ripple, and a conducted EMI. Further, the technical effects and benefits of embodiments can include balancing in each switching cycle output voltages for two paralleled rectifiers and a circulating current (which is also limited to the coupling inductors). Note that since the coupling inductors of the rectifier system are with a function of circulating current control and boost inductor, no extra boost inductor is needed by the rectifier system.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A three-phase paralleled active front-end rectifier, comprising:

    two voltage-source-rectifiers connected in parallel to an alternating current power side through a coupling inductor and connected directly to a direct current power side,
    wherein the three-phase paralleled active front-end rectifier is configured to transfer alternating current power with a zero common-mode from the alternating current power side to the direct current power side by regulating a direct current voltage of the three-phase paralleled active front-end rectifier and controlling the alternating current power.

2. The three-phase paralleled active front-end rectifier of claim 1, wherein each of the two voltage-source-rectifiers includes three pairs of switches connected directly to the direct current power side and through coupling inductor in the alternating current side.

3. The three-phase paralleled active front-end rectifier of any preceding claim, wherein the coupling inductor includes three pairs of windings and is configured to control a circulation current of the three-phase paralleled active front-end rectifier.

4. The three-phase paralleled active front-end rectifier of any preceding claim, wherein the coupling inductor includes three inductors, each of which includes one pair of windings.

5. The three-phase paralleled active front-end rectifier of any preceding claim, wherein the alternating current power side includes three alternating current power sources.

6. The three-phase paralleled active front-end rectifier of any preceding claim, included in a ropeless elevator system.

7. A method for controlling three-phase paralleled active front-end rectifier, comprising:

    transferring, by the three-phase paralleled active front-end rectifier, alternating current power with a zero common-mode from an alternating current power side through two voltage-source-rectifiers of the three-phase paralleled active front-end rectifier to an alternating current power side,
    wherein the two voltage-source-rectifiers are connected through a coupling inductor to the alternating current power side and connected directly to the direct current power side;
    regulating, by the three-phase paralleled active front-end rectifier, a direct current voltage of the three-phase paralleled active front-end rectifier; and
    controlling, by the three-phase paralleled active front-end rectifier, the alternating current power via alternating current waveforms.

8. The method of claim 7, wherein each of the two voltage-source-rectifiers includes three pairs of switches connected directly to the direct current power side and through coupling inductor in the alternating current side.

9. The method of claims 7 or 8, further comprising:

   controlling a circulation current of the three-phase paralleled active front-end rectifier by three pairs of windings of the coupling inductor.

10. The method of claims 7, 8 , or 9, wherein the coupling inductor includes three inductors, each of which includes one pair of windings.

11. The method of claims 7, 8, 9, or 10, wherein the alternating current power side includes three alternating current power sources.

12. The method of claims 7, 8, 9, 10, or 11, wherein the three-phase paralleled active front-end rectifier is included in a ropeless elevator system.

FIG. 1

FIG. 2

EP 3 104 517 A2

FIG. 3

FIG. 4

EP 3 104 517 A2

FIG. 5

EP 3 104 517 A2

Rectifier 2

Rectifier 1

$1$

$1-t_0/T_s$
$1-(t_0+2t_2)/T_s$
$1-(t_0+2t_1)/T_s$
$1-(t_0+2t_1+2t_2)/T_s$

$-1$

$T_s$

$t_0/4 \quad t_1/2 \quad t_2/2 \quad t_0/2 \quad t_1/2 \quad t_2/2 \quad t_0/4$

FIG. 6

Path 1: coupling inductor flux, for circulating current control

Path 2: leakage inductor flux, for boost inductor

715

720

710

700

FIG. 7

EP 3 104 517 A2